(19) Europäisches Patentamt
European Patent Office
Office européen des brevets

(11) **EP 3 826 294 A1**

(12) **EUROPEAN PATENT APPLICATION**

(43) Date of publication:
26.05.2021 Bulletin 2021/21

(21) Application number: 19306506.7

(22) Date of filing: 22.11.2019

(51) Int Cl.:
*H04N 5/235* (2006.01)     *H04N 5/262* (2006.01)
*G06T 15/50* (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **InterDigital CE Patent Holdings 75017 Paris (FR)**

(72) Inventors:
• **JOUET, Pierrick**
  **35576 Cesson-Sévigné (FR)**
• **BAILLARD, Caroline**
  **35576 Cesson-Sévigné (FR)**
• **ROBERT, Philippe**
  **35576 Cesson-Sévigné (FR)**

(74) Representative: **Interdigital**
**975, avenue des Champs Blancs**
**35576 Cesson-Sévigné Cedex (FR)**

(54) **SYSTEMS AND METHODS FOR IMAGE PROCESSING**

(57)     The disclosure relates to a method to be performed in an electronic device coupled with a camera adapted to operate using several exposures controlled by said electronic device. The method can include obtaining light source directions from first images captured by the camera with a first exposure and, upon detecting a variation between light source directions determined for two of the first images, selecting a second exposure to be used to operate the camera. The method can include selecting a first exposure to be used to operate the camera by obtaining test images of a same scene captured by the camera using the several exposures, obtaining brightness masks associated with the test images, obtaining quantities of pixels with varied brightness between pairs of masks associated with ordered values of exposures, and selecting the first exposure from the several exposures by taking into account the obtained quantities of pixels with varied brightness.

Corresponding apparatus, system, computer program product and medium are also disclosed.

Figure 3A

EP 3 826 294 A1

**Description**

**Introduction**

The domain technical field of the present disclosure is related to the domain of image processing. For instance, one or more embodiments are related to a method for sensing of real 3D scene, for instance for capturing at least one visual content regarding a real scene. Corresponding application, device, electronic assembly, system, computer readable program product and computer readable storage medium are described.

**Background**

This section is intended to introduce the reader to various aspects of art, which may be related to various aspects that are described and/or claimed below. This discussion is believed to be helpful in providing the reader with background information to facilitate a better understanding of the present document. Accordingly, these statements are to be read in this light, and not as admissions of prior art.

Many electronic devices can be coupled to sensors to acquire information regarding a real 3D scene. Such sensors can encompass for example (wearable or not) sensors that acquire information regarding a shape, a pose, a position and/or a motion of an object of the real scene, like depth camera or colorimetry camera.

In the field of Augmented Reality (AR) or Mixed Reality (MR) for instance, a virtual scene can be obtained from at least a part of the real scene, by including some virtual object(s) in a rendering of the real scene or by altering a part of the real scene, i.e. by blending the real scene with elements synthesized by using a 3D engine.

Data captured from the real scene can be used, further to the rendering of the real scene, for obtaining a more realistic rendering of virtual objects in the virtual scene. For instance, data obtained by modeling of 3D lighting in a real 3D scene can be used for obtaining realistic shadows for some virtual objects included in the virtual scene.

However, relying on sensors can lead to some issues for modeling a virtual scene because of the complexity of the real world and to limited capabilities of sensors. For instance, data captured by a camera can be altered because of an overexposure or/ and an underexposure of some areas of the scene acquired by the camera.

So, there is need for a solution that enhance the user experience of an application using as input data captured by a sensor.

**Description**

References in the document to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

At least some embodiments of the present principles enable at least one of the above disadvantages to be resolved by proposing a method for selecting an exposure to operate a camera.

At least some embodiments of the present principles enable at least one of the above disadvantages to be resolved by proposing a method, to be performed in an electronic device coupled with a camera adapted to operate using a plurality of exposures controlled by the electronic device, the method comprising:

- obtaining one or more light source direction from a plurality of first images captured by the camera with a first exposure and,
- upon detecting a variation between the light source directions determined for at least two of the first images, selecting a second exposure to be used to operate the camera.

At least some embodiments of the present principles enable at least one of the above disadvantages to be resolved by proposing a method to be performed in an electronic device coupled with a camera adapted to operate using a plurality of exposures controlled by the electronic device, the method comprising selecting a first exposure to be used to operate the camera, the selecting comprising :

- obtaining a plurality of test images of a same scene captured by the camera, the camera using a plurality of exposures,
- obtaining brightness masks associated with images of the plurality of test images;
- obtaining quantities of pixels with varied brightness between pairs of masks associated with successive ordered values of exposures; and

- selecting the first exposure from the plurality of exposures by taking into account the obtained quantities of pixels with varied brightness.

According to another aspect, there is provided an electronic device. The electronic device comprises a processor and is coupled to a camera. The processor can be configured to perform any of the aforementioned methods in any of its embodiments.

According to another general aspect of at least one embodiment, there is provided a system comprising a camera and an electronic device, coupled to the camera, and comprising a processor that can be configured to perform any of the aforementioned methods in any of its embodiments.

According to another general aspect of at least one embodiment, there is provided a non-transitory computer readable medium comprising instructions of a software program, which when the program is executed by a computer, cause the computer to carry out any of the aforementioned methods in any of its embodiments.

According to another general aspect of at least one embodiment, there is provided a computer program product comprising instructions which, when the program is executed by a computer, cause the computer to carry out any of the aforementioned methods in any of its embodiments.

BRIEF DESCRIPTION OF THE DRAWINGS

The present disclosure can be better understood, and other specific features and advantages can emerge upon reading the following description, the description referring to the annexed drawings wherein:

- Figure 1 shows an example of a system according to an exemplary embodiment of the present disclosure;
- Figure 2 illustrates an example functional structure of an electronic device adapted to implement at least some of the embodiments of the method of the present disclosure;
- Figure 3A depicts an overview of some different aspects of the methods of the present disclosure, according to least some of their embodiments;
- Figure 3B presents in more details some of the aspects, introduced by figure 3A, of the methods of the present disclosure, according to least some of their embodiments;
- Figure 4 illustrates a flow chart of the initializing and/or adjusting stage, according to least some embodiments of the present disclosure;
- Figure 5 illustrates the processing of images captured with the high and low exposures introduced in link with the initializing and/or adjusting stage, according to least some embodiments of the present disclosure;
- Figure 6 illustrates a flow chart for mask and light direction estimation, according to least some embodiments of the present disclosure;
- Figure 7 illustrates a control of exposure value according to least some embodiments of the present disclosure;
- Figure 8 shows an exemplar computing of the count of "non-zero pixels" for the tested exposure values;
- Figure 9 is a picture of an exemplary real scene;
- Figure 10 shows masks obtained from pictures of the exemplary scene of figure 10 captured with different exposures;
- Figure 11 presents a curve showing the counts of non-zero pixels for the different tested exposure values as computed according to figure 8;
- obtained from pictures of the exemplary scene of figure 10 captured with different exposures;
- Figure 12 presents another exemplary curve showing the counts of non-zero pixels for the different tested exposure values for another scene;
- Figure 13 illustrates an exemplary flow chart for light direction and intensity estimation, according to at least some embodiments of the present disclosure;
- Figure 14 illustrates in more details an exemplary flow chart for intensity and color estimation, according to least some embodiments of the present disclosure;
- Figure 15 illustrates a flow chart of the run-time stage, according to least some embodiments of the present disclosure.

It is to be noted that the drawings illustrate example embodiments and that the embodiments of the present disclosure are not limited to the illustrated embodiments. For example, as obvious for the one of skill in the art, embodiments of the present disclosure can also be implemented in a more complex tracking system than the one illustrated by the figures.

DETAILED DESCRIPTION

The subject matter is now described with reference to the drawings, wherein like reference numerals are used to refer to like elements throughout. In the following text, for purposes of explanation, numerous specific details are set forth in order to provide a thorough understanding of the subject matter. It can be evident, however, that subject matter embodiments can be practiced without these specific details.

According to non-restrictive embodiments, methods and devices to select automatically, or at least partially automatically, at least some parameters (like an exposure) of a visual content acquiring device (like a camera) are disclosed.

In the following, by "visual content" it is to be understand a video content, one or more sequence of images, and/or one or more still images, or a composition thereof. An image (also called a frame) contains one or several arrays of samples (pixel values) in a specific image/video format which specifies all information relative to the pixel values of an image and all information which may be used by a display and/or any other device to visualize and/or decode an image for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional trichromatic RGB representation. A video content corresponds to a sequence of temporally successive images (or frames), a determined time being associated with each image/frame of the video content. In a variant, a video content may comprise a single image/frame. Audio content and/or haptic content may be associated with the video content, the audio content and/or haptic content being synchronized with the video content.

At least some embodiments of the present disclosure relate to a control of at least some of the parameters of at least one acquiring device, like a camera, used for capturing visual data (or content) regarding a real scene. The data captured by the camera can notably be used for computing a direction and an intensity of at least one incoming light, coming from at least one light source, of the real scene. Light direction and intensity of at least one of the incoming light(s) can then be taken into account, in a context of VR or AR, in link with an insertion of at least one virtual object in the real scene or upon altering the real scene by modifying and/or suppressing an object of the real scene for instance. Light direction and intensity are computed based on bright areas of the real scene as captured by a camera.

At least some embodiments of the present disclosure relate to adjusting, at least partially automatically, an exposure of at least one camera used for capturing data regarding the real scene. Indeed, the exposure of the camera controls the amount of light falling on areas of the real scene during its capture by the camera. Therefore, varying the exposure of the camera can permit brightness adjustment on at least one area of the scene as captured by the camera in order to determine more accurately the brightest areas of the real scene and thus the light directions and intensities.

The adjusting of the exposure can be performed prior to a run-time operation of the camera (e.g. prior to the operational state of the camera), for instance during an initialization stage ending by the beginning of the run-time behavior (e.g. by a transition from an initialization state to the operational state), or during an adjustment stage upon detecting some deviations of the light directions in the real scene during run time or from time to time.

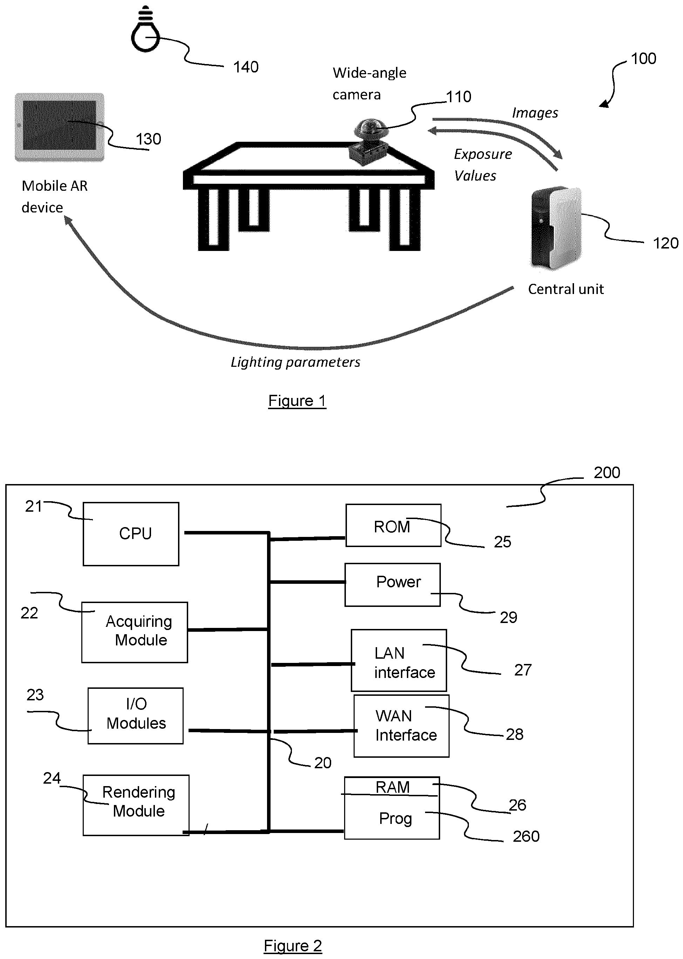

Figure 1 illustrates an exemplary system 100 adapted to implement at least one embodiment of the present disclosure. The system 100 comprises at least one acquiring device (like a camera 110), adapted for acquiring at least a visual part of the real scene. Depending upon embodiments, the camera can be of different types. Depending upon embodiments, the camera can be a camera with a fixed location, or a mobile camera, which location can vary upon the time, for instance a mobile camera in a known location inside the scene. For the ease of explanations, embodiments of the present disclosure will be mainly described hereinafter in link with a fixed location camera, but it is to be understand that embodiments of the present disclosure can also encompass a use of a mobile camera. For instance, the method of the present disclosure can be performed, in at least some of its embodiments, during at least one time interval where a mobile camera is in a fixed location. The camera can be a "fish eye" camera for instance, providing a large field of vision.

In the illustrated embodiment, the at least one camera is coupled via at least one wired and/or wireless connection (e.g. a WIFI or Bluetooth connection) to an electronic device 120 comprising a processing unit, like a Central Processing Unit (CPU) . The camera can be controlled at least partially by the electronic device and is operable with a plurality of exposures. For instance, in the illustrated embodiment of figure 1, exposure commands can be sent by the electronic device 120 to the camera 100 using a wireless connection, and image and/or video captured by the camera can be transmitted to the electronic device via a wired connection (like a High Definition Media Interface (HDMI) cable).

The system 100 is adapted to acquire and process a real scene that can be used in order to obtain a virtual scene (like an AR or MR scene). According to figure 1, the system comprises at least one rendering device 130 adapted to render an AR or MR scene based on the real scene, the rendering including for instance a display of a visual part of the AR scene. The at least one rendering device 130 of the system 100 can comprise at least one tablet, at least one wearable display, like a smart watch or a Head-Mounted Display (HMD) (for instance AR glasses), or one or more rendering devices, like a personal computer, a TV Set and/or a smartphone.

The real scene is illuminated by at least one light source(s) 140 (including for instance at least one electrical light source, like a light bulb, a LED and/or a neon, and/or at least one natural light source like a window).

The AR or MR scene can be generated by an AR or MR application executing on the rendering device 130 (as illustrated by figure 1) and/or on another device (not illustrated) like a tablet, a smartphone, a personal computer, a local and/or remote server, communicating with the rendering device.

The central unit 120 is adapted to control the exposure used by the camera 110 for acquiring at least one image and to get the acquired image(s). It uses these multiple input images to estimate the lighting directions and intensity. The lighting parameters can be sent to at least one AR device (like tablet 130 or the another device), either systematically, or from time to time, for instance on request on the AR device . Modeling of the lights incoming from the light source(s) can for instance be used by the AR/MR application for obtaining realistic shadows in the AR or MR scene.

In at least some embodiments, the system can comprise only a single camera. Such embodiments can thus permit to provide an AR scene using a simple system, less complex, and thus often cheaper, than some known systems.

According to at least some embodiments, at least one bright area, associated with an incoming light, can be extracted from data captured by a camera of the acquiring device. This can be performed for instance, by comparing the amount of light falling on the sensor with one or more values (like with one or more threshold(s)). The mass center of a bright area can then be used for computing a direction of a corresponding incoming light. However, in such embodiments, light direction accuracy can depend on the values used for the comparing (like the thresholding quality). One particular difficulty is to avoid overexposure. Indeed, blooming effect in a bright area with very strong intensity (or "saturated area") can disrupt the computation because the bright areas with very strong intensity will overflow on the captured image.

At the difference with some prior art solutions, the present disclosure takes into account a variation of intensity of at least one incoming light over time for obtaining a current value of a threshold. Indeed, the optimal threshold value is dependent on light variations. More precisely, at least some embodiments of the present disclosure (adapted for instance to cameras like Charged Coupled Device (CCD) cameras) can help to avoid, or at least limit blooming effect in saturated areas. Notably, some embodiments can even help to avoid, or at least limit blooming effect in case of uncontrolled brightness illumination.

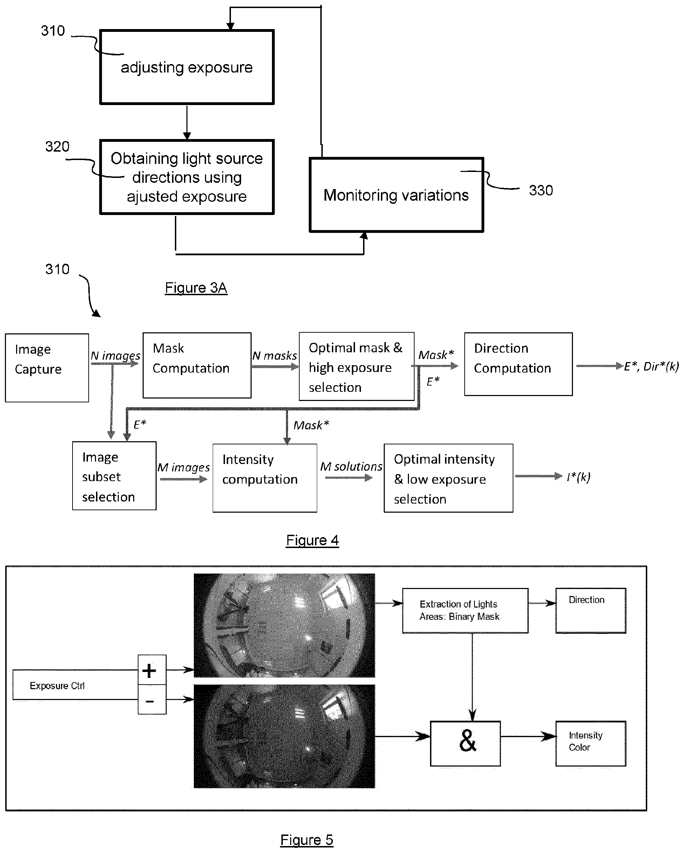

Figure 3A illustrates two different aspects of the present disclosure. A first aspect of the present disclosure deals with obtaining 310 a first exposure (sometimes referred to hereinafter as an "optimum exposure" or an "high exposure") for the camera. This first exposure can be an exposure selected as being optimal for determining light direction and intensities from the capture of the real scene with the camera, or being the exposure that seems to lead to the best results amongst several tested exposures. A second aspect of the present disclosure relates to monitoring 330 light source directions obtained 320 with this first exposure. At least some embodiments of the method of the present disclosure can comprise, when a change occurs in light source directions over time, obtaining an updated exposure value to be used for updating the setting of the camera (by iterating the Obtaining 310 of an exposure for instance). In at least some embodiments, the exposure of the camera can be controlled at least partially automatically through a control of the shutter of the camera, like controlling a duration of shutter opening of the camera.

The first and second aspects introduced above in link with figure 3A are presented for simplicity purpose with some exemplary embodiments compatible with both aspects, but it is to be understand than they can be implemented independently in some other embodiments.

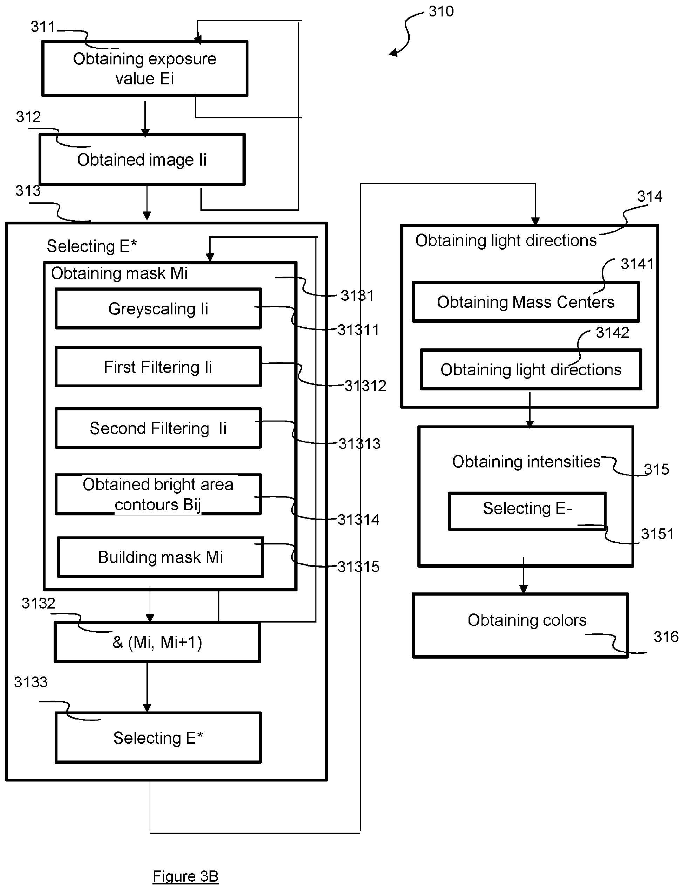

Figure 3B details more deeply the first aspect (obtaining 310 a first exposure for being later used when the camera is in operation) (in link with figures 4 to 14). As illustrated, the Obtaining 310 (or selecting) of the first exposure comprises testing a plurality of exposures for capturing the (same) real scene, testing an exposure comprising:

- Obtaining 311 a value $E_i$ of the exposure to be tested;
- Obtaining 312 at least one (test) image $l_i$ of the real scene captured by the camera with the tested exposure value $E_i$;

In some embodiments, obtaining the exposure value $E_i$ can be performed prior to the obtaining 312 of the image $l_i$, the exposure value $E_i$ being selected from a plurality of candidate exposure values associated to the camera for instance, and the method comprising for instance sending a command to the camera to set the current exposure value of the camera to the value $E_i$. In a variant, the command can comprise sending, to the camera, a value of another parameter that will lead, once applied, to the exposure value $E_i$. Indeed, the exposure value depends notably on the camera shutter speed, the camera lens aperture and the luminance of the real scene. When the value of the camera lens aperture is a fixed value, the exposure only depends on shutter speed (for a given lighting). Hence the control of the exposure can be done through the control of the shutter for instance.

The sending of a command to the camera can be optional. Indeed, in some embodiment, the camera can determine on its own the exposure to be set (thanks to a stored scenario for instance or by accessing a storage means storing exposure values to be used successively by the camera) . In some embodiments, the camera can inform the device 120 of the exposure $E_i$ used for capturing the image $l_i$. In such embodiments, the obtaining of the exposure by the device 120 can be performed prior, during, and/or after the obtaining of the image $l_i$.

In some embodiments, the transmission by the camera of the used exposure $E_i$ can be optional. For instance, the device 120 can obtain an exposure used by the camera for capturing the image by accessing some storage means storing exposure values that are to be used successively by the camera. The successive exposures can be stored in a storage means shared by the camera and the device 120 for instance.

The method can comprise selecting 313 the exposure value E* to be used in operation (or in other words at run time) for capturing images of the real scene. The selecting 313 can involve processing images captured by the same camera with the tested exposure values (N different candidates exposures for instance).

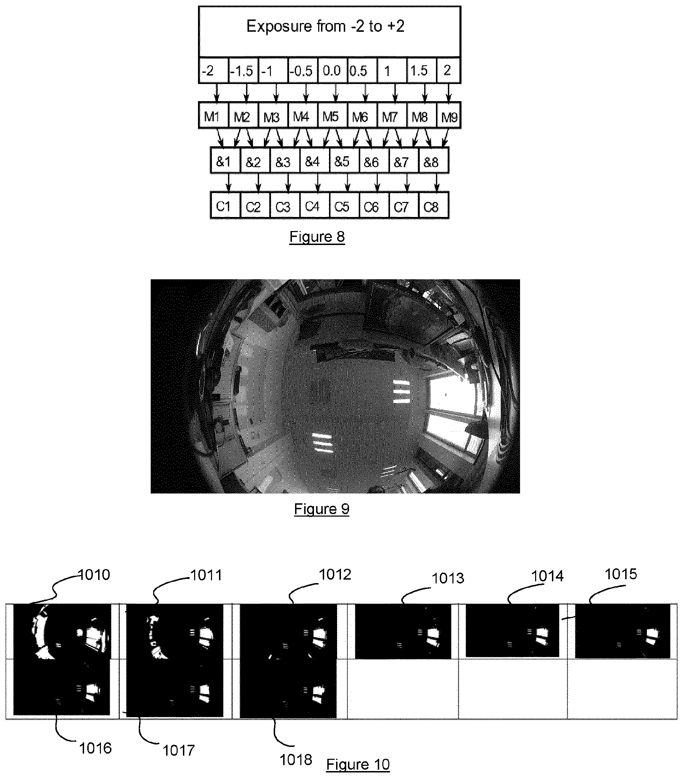

In illustrated exemplary embodiment of figure 16, the selecting 313 can comprise, for a tested exposure Ei, obtaining 3131 a mask Mi of bright areas (and thus of potential light sources) of an image li captured with the exposure value Ei. The mask can be a binary mask with white and black values for instance as illustrated by figure 10.

Obtaining 3131 a mask can be performed differently upon embodiments. For instance, in the exemplary embodiments of figure 3B, 6 and 7, the method can comprise thresholding the brightness values of pixels inside the operational image and thus distinguishes the brightest pixels from the other ones. Obtaining 3131 (or determining) a mask Mi can comprise converting 31311 the captured image in grayscale, filtering (first filtering 31312) the "gray-scaled" image to remove, from the "gray-scaled" image li, at least some outliers (small saturated areas). For instance, the smallest saturated areas can be removed from the "gray-scaled" image li, as detailed below, in the exemplary use case of a 2D filtering, based on a correlation of the captured (optionally "gray-scaled") image with a kernel. $dst(x,y) =$

$$\sum_{\substack{0 \le x' < kernel.cols \\ 0 \le y' < kernel.rows}} kernel(x',y') * src(x+x', y+y')$$ with

> src: captured (optionally gray-scaled) image and
> dst: filtered image obtained by 2D filtering
> (x,y) : coordinates of a pixel of the src/ dst image,
> (x', y') : coordinates of an element of the kernel.

The method can comprise a further filtering (second filtering 31313) of the "gray-scaled", first filtered, image. This further filtering can be performed by comparing bright values of pixels with at least one first value(s), used as a threshold. As an exemplar, this further filtering can return a binary (bi-level) image out of the grayscale image.

$$dst(x,y) = \begin{cases} maxval \; if \; src(x,y) > thresh \\ 0 \; otherwise \end{cases}$$

with :

> src: "first filtered" image
> dst: "second filtered" image obtained by this further filtering
> (x,y) : coordinates of a pixel of the src/dst image,
> maxVal is a maximum brightness value of a pixel (for instance 255 in an 8-bit coding)

For instance, the same first value can be used for all bright areas of all images.

The method can also comprise extracting 31314 contours of the bright areas still present on the filtered gray-scaled image li and building 31315 a binary mask based on those extracted contours.

Contours can be extracted for instance by using solutions like the ones of Suzuki and all (Topological Structural Analysis of Digitized Binary Images by Border Following. CVGIP 30 1, pp 32-46 (1985).Pixels of the masks can be assigned a binary value, being either 1or 0, according to their brightness. Bright areas, corresponding to neighbor pixels having the same value (like all having a "1" value) are also called "connected components" of the mask.

The obtaining 3131 of a mask can be performed for N tested exposure values (with N being an integer greater than 1 (for instance 5, 9, 10, 12, 15), leading to at least N captured images and to at least N obtained masks derived from those at least N images, at least one mask being computed for each of the N tested exposure.

Figure 9 shows an exemplary image of a real scene, captured by a fisheye camera, like the fisheye camera of the system 100 of figure 1, and Figure 10 shows 9 masks 1010, 1011, 1012, 1013, 1014, 1015, 1016, 1017, 1018 obtained for 9 images of the same scene captured with 9 different exposures.

In the exemplary embodiments illustrated, the method can further comprise determining a quantity of pixels with varied brightness between pairs of masks associated with successive ordered values of exposures and the selecting of the first exposure can take into account said determined quantity of pixels with varied brightness. For instance, once at least two masks have been obtained for two consecutive exposures (ordered according to increasing values for instance) the method can comprise applying a "And" operation 3132 between pixels of an obtained mask Mi, obtained for the exposure Ei, with pixels of the mask obtained for the exposure Ei+1, with Ei and Ei+1 being two consecutive exposures. The "And" operation can be applied to pixels of several pair of masks corresponding to consecutive exposure values, for instance to pixels of at least N pairs of masks as illustrated by Figure 8. Then, the method can comprise selecting 3133 the exposure value E* to be used in operation (or in other words at run time) for capturing images of the real scene according the number Ci of "non-zero" pixels output by the "and" operations &i per exposure value Ei.

The And operation can be performed after having obtained all the N masks, or before having obtained all masks, for instance the "And" operation can be performed on two obtained masks, before the obtaining of the following masks.

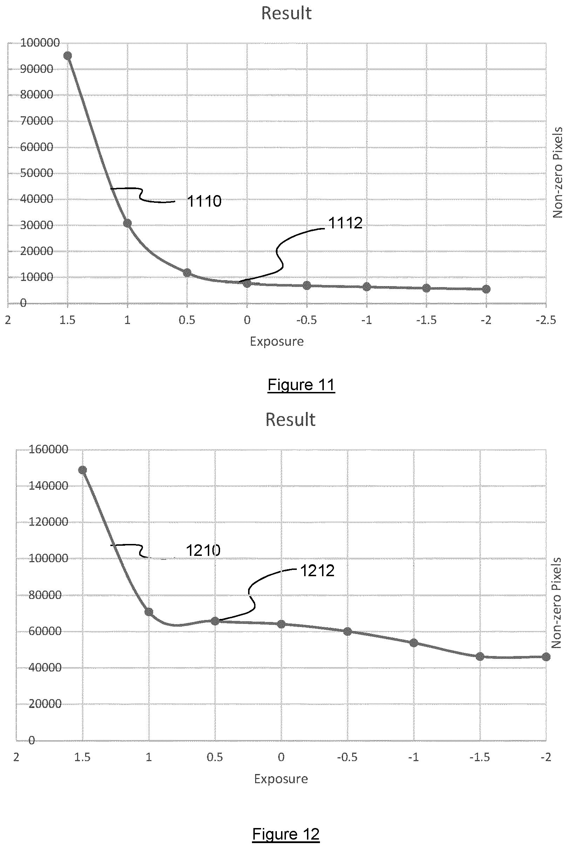

Figure 11 and Figure 12 each illustrates a curve 1110, 1210 representing the number of "non-zero" pixels per exposure values for two exemplary embodiments. Curve 1110 of Figure 11 (being a non-zero curve) represents, in link with figures 8 and 10, the count of non-zero pixels obtained by applying a "AND" operation between pixels of masks 1010, 1011, 1012, 1013, 1014, 1015, 1016, 1017 of different exposures with, respectively, pixels of the mask 1011, 1012, 1013, 1014, 1015, 1016, 1017, 1018 having an exposure consecutive to their own exposure (or say simply applying "&i", i=1 to 8, as shown by Figure 8).

In the detailed embodiments, the method can comprise selecting 3133 the exposure value E* to be kept for the operation of the camera as the greatest (or highest) exposure used by said camera corresponding to a quantity of non-zero pixels being lower than a first value. For instance, the exposure value E* to be kept for the operation of the camera can be selected as the highest exposure value being a zero value of the derivative of the curve 1110, 1210 (thus as the first zero value of the derivative of the curve 1110, 1210 when represented with decreasing exposure values). For the illustrated curve 1110 of figure 11, the first zero value 1112 corresponds to the exposure value "0" while for the illustrated curve 1210 of figure 12, the first zero value 1212 corresponds to the exposure value "0.5".

In the exemplary detailed embodiments, the method can further comprise obtaining 314, for at least one image I* captured with the high exposure E*, one or more light source direction according to bright areas of a mask M* associated with the captured image I*. The mask M* can also be referred to hereinafter as the "optimal" mask. As illustrated, the method can comprise computing 3141 a mass center of at least one connected component of the mask M* obtained for the selected exposure E*. (For instance, in some embodiments, mass centers of all the connected components of the mask can be computed).

Obtaining mas centers can be performed differently upon embodiments. For instance, it can involve computing of moments.

For instance, for a mask of a grayscale filtered image, moments $M_{ij}$ (with i, j: 0 or 1) can be computed by:

$$M_{ij} = \sum_x \sum_y x^i y^j I(x,y)$$

where :

(x,y) represent coordinates of a pixel of the image and
$I(x,y)$ represent intensity of the pixel represented by (x, y) (For a binary mask, I(x,y) is equal to 1 or 0)

The mass center can be obtained as being the centroid:

$$\{\overline{x}, \overline{y}\} = \left\{ \frac{M_{10}}{M_{00}}, \frac{M_{01}}{M_{00}} \right\}$$

The method can further comprise computing 3142 at least one light direction, based on the position of the mass center(s) of the mask M* and on the optical center of the camera.

In the exemplary implementations detailed below, the following notations are used:

(x,y) : 2D location of a mass center of the mask M*
(x',y',1) : 3D direction of the corresponding point light in the scene,
$(c_x, c_y)$ : coordinates of the optical center of the camera,
$(f_x, f_y)$ : coordinates of the focal of the camera,

A Pinhole projection is first used for obtaining x' and y' by:

$$x' = \frac{(x - c_x)}{f_x}$$

$$y' = \frac{(y - c_y)}{f_y}$$

Then, light direction of a light source corresponding to a mass center can be determined based on the polar coordinates of the mass center:

$$r = \sqrt{x'^2 + y'^2}$$

$$r = \tan(\theta)$$

The distortion $\theta_d$ introduced by a fish eye camera when capturing an image can be expressed by:

$$\theta_d = \theta * (1 + K_0\theta^2 + K_1\theta^4 + K_2\theta^6 + K_3\theta^8) \text{ (with K1, K2, K3, K4 = distortion coefficients)}$$

We have to find θ :

Let $f(\theta)$ be the cost function:

$$f(\theta) = \theta_d - \theta * (1 + K_0\theta^2 + K_1\theta^4 + K_2\theta^6 + K_3\theta^8) \ (1)$$

We can apply the Newton Method to solve :

$$x_{n+1} = x_n - \frac{f(x_n)}{f'(x_n)}$$

$$\theta_{n+1} = \theta_n - \frac{f(\theta_n)}{f'(\theta_n)}$$

$$\theta_{n+1} = \frac{\theta_d + 2K_0\theta^3 + 4K_1\theta^5 + 6K_2\theta^7 + 8K_3\theta^9}{1 + 3K_0\theta^2 + 5K_1\theta^4 + 7K_2\theta^6 + 9K_3\theta^8}$$

(with, at initialization: $\theta = \theta_d$)

The distorted direction value coordinates (in 3D) are [$x_{3d}$; $y_{3d}$, $z_{3d}$] where

$$x'=(\theta d/r)\ x_{3d}$$

$$y'=(\theta d/r)\ y_{3d}$$

Finally, we change r by $\tan(\theta)$

$$x_{3d} = \frac{\tan(\theta)}{\theta d} * x'$$

$$y_{3d} = \frac{\tan(\theta)}{\theta d} * y'$$

$$z_{3d} = 1$$

Parameters of the camera (like coordinates of the optical center and of the focal, and/or distortion coefficients) can be obtained by calibration of the camera.

For instance, following values can be obtained in the illustrated embodiment:

For coordinates (fx, fy) of focal:

fx = 426.33998688735085; (in pixel)
fy = 427.36756133524983; (in pixel)

For coordinates (cx, cy) of optical center:

cx = 891.7843549606591; (in pixel)
cy = 584.801189370156; (in pixel)
For distortion coefficients
K0 = 0.01905711932985201;
K1 = -0.03697120984108299;
K2 = 0.02977740538538572;
K3 = -0.0073397999491537315;

In the above embodiment, the obtaining of the at least one light direction is performed on a single mask M*, being the mask derived from the image captured with selected exposure value E*.

In some variant, the obtaining of the at least one light direction can be performed based on mass centers of connected components (or bright areas) of one or more masks (for instance masks obtained with neighbored values of the selected value E*). For instance, a unique mass center can be obtained for the several close bright areas (like light provided by several parallel and close neon sources), thus leading to a single light source for representing the several close bright areas (for simplicity of the processing of the virtual scene for instance). In some embodiments, a split operation can be applied on the mask, resulting in at least one connected component of the mask providing several mass centers (the connected component can be either split into several connected components, or split into several sub-areas, each sub-area providing one mass center).

Such embodiments can thus permit a positioning (instead of a large light source) of several spot or point lights, which can improve the final rendering of a scene, notably in case of a large real scene.

In the exemplary detailed embodiments, the method can further comprise obtaining lighting intensities 315 of at least some of the light sources (as illustrated by Figures 5, 13 and 14).

In the exemplary detailed embodiments, obtaining lighting intensities 315 of at least some of the light sources can comprise obtaining 3151 (or computing) a second exposure value E-, referred to herein after as "low" exposure value E-and computing lighting intensities using this "low" exposure value.

The intensity of a light source can be obtained from at least one image and from at least one mask. Notably the at least one mask can be a mask obtained from a different image than the at least one image. The image can be a color image or a gray-scaled image. When several images are used, one of the images can be a color image, and another one can be a gray-scaled image. The detailed embodiments use as input a single mask, being the mask M* derived from the image captured with the high exposure value E*, and a subset of the images obtained (312) with the tested exposures of the camera, the subset only comprising the images captured with an exposure value being lower than the high exposure value E*. More precisely, in the exemplary embodiments illustrated, the method can comprise obtaining (estimating for instance) an intensity value for at least one connected component of the mask M* and at least one image of the subset. In some embodiments, an intensity value can be estimated for each connected component of the mask M* and for each image of the subset. The way an intensity value of a light source is obtained can differ upon embodiments. For instance, in case of a color image, an intensity value Y of a pixel can be obtained via a sum of linear combination of the color values of the pixel s (example: Y = 0.7152G + 0.2126R + 0.0722B with color components using Red Green blue (RGB) format). In some embodiments, using a gray scale image in place of a color image, an intensity value of a pixel can be obtained via a sum of the gray level values of the pixel.

The intensity value of a connected component can be deduced from the intensity values of its pixels (for instance the intensity value of a connected component can be computed as an average of the intensity values of its pixels).

In some embodiments, obtaining intensity values can comprise normalizing relative intensities values, for example by dividing the above sum by the total number of pixels in detected light areas.

In such an embodiment, obtaining the low exposure can only comprise obtaining intensity values from a single image.

In the detailed embodiments, an intensity of each connected component of the "optimal" mask M* is computed for each image captured with an exposure value below E* (notably an exposure E- strictly below E*). The exposure value being the highest exposure value below E* leading to a mask M-with no saturated region is selected as the low exposure E-. The final intensities values kept for the light sources (for processing AR objects for instance during run time) are the ones obtained using the image(s) captured with the low exposure E- .

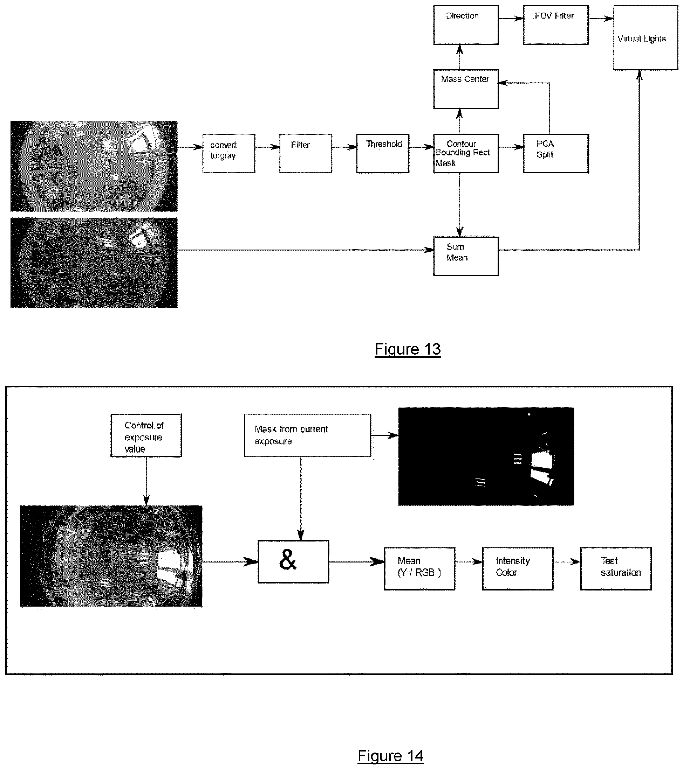

In some embodiments, as illustrated by figure 5 and 14, the method can comprise determining (or obtaining) 316 colors of at least one light source from an image. For instance, an average color intensity value can be computed per bright area for each color channel of the image. Such an embodiment can provide information about the main color of a light (e.g. mainly blue for external light through a window).

In the detailed embodiments, as shown by figure 4, the output of the adjusting (or initialization) stage can thus comprise:

- the high exposure value E*, which is the adjusted exposure to be used in run-time stage for capturing images,
- information regarding light sources, comprising notably a number of light sources, estimated lighting directions Dir(k) of one or more light sources, and estimated lighting intensities I(k) of one or more light sources, where k denotes the index of the light source k.

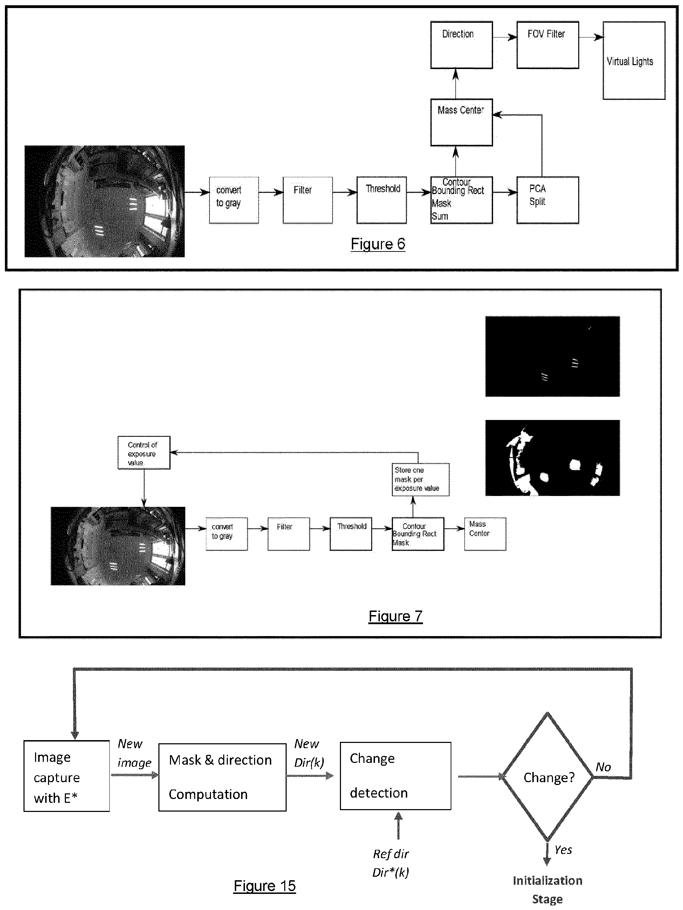

The second aspect of the present disclosure is detailed hereinafter in link with figures 3A and 15. The second aspect can be performed at run time and relates to a monitoring 330 of variation of light source directions obtained 320 from images of the real scene captured during run-time in order to detect a variation of the light source directions. In such a case, the current exposure can be updated. As explained above, the first and the second aspect can be implemented independently (one being implemented without the other). However, for the ease of explanations, the second aspect is detailed hereinafter after in link with exemplary embodiments where the second aspect is implemented at run time and used as input at least some of the output of the adjustment stage depicted above.

In the exemplary embodiments, according to the second aspect of the present disclosure, the method can comprise monitoring 330 light source directions obtained 320 from at least one image of the real scene captured by the camera (as illustrated by figure 9 for instance) with the high value exposure E*. The obtaining 320 of light source directions and the 330 monitoring of variation can be performed during a run-time stage (or an operational state of the camera) where the captured images are transmitted to a processing device (for some AR processing for instance).

In the exemplary embodiments, the method can comprise obtaining masks of at least some of the captured images(using the high exposure E*) and obtaining light directions inside the masks of the at least some of the captured images. Obtaining a mask from a captured image and obtaining light directions from this mask can be performed similarly to the obtaining of at least one mask and the obtaining of light directions, as described regarding the first aspect for a test captured image.

Upon detecting a change (or variation) in light directions obtained from at least two captured images, the method can comprise updating the current exposure. For instance, in the exemplary embodiments, the current run-time processing of images captured with the camera can be stopped, or interrupted, and the adjustment method of the first aspect can be performed again, leading notably to updated values of the high exposure E* and/or the low exposure E-, and consequently to updated light directions and/or intensities . Of course, the number of exposures tested during the adjustment can be different from a number of exposures tested during a previous the adjustment. For instance, in some embodiments, the number of exposures tested during the adjustment can be lower than the number of exposures tested during a previous adjustment. Such embodiments can help limiting the time necessary to obtain an adjusted exposure and thus the length of the interruption of the run time operation, which can be seen as an advantage in terms of user consumption. In some embodiments, the number of exposures tested during the adjustment can be equal or even greater than the number of exposures tested during a previous adjustment. Such situation can be encountered in embodiments where the number of exposures tested prior to the run-time is limited, then permitting for instance to start more quickly the run-time operation of the camera (and thus improving the user experience in terms of reactivity of the system), more exposures being tested later if necessary, in order for instance to obtain a more accurate exposure.

The change in light directions can correspond for instance to a change of the number of lights or to a change of the direction of an unchanged number of light sources (existing light being not detected or moved for instance).

In some embodiments, the updating of the exposure can be performed only when a change is detected over a certain number of frames or over a certain time, like 5, 10, 15, or more frames. Such an embodiment can permit to be tolerant to short-term occlusions. For instance, an embodiment where an updating is performed only when a change is detected over at least ten frames can permit to ignore variation due to a person walking across the light of a light source.

It is to be pointed out that in case of variation of intensity of a light source, the mass center of the concerned area is also likely to move, hence implying a change in the corresponding obtained light direction (and thus, in the illustrated embodiment, an adjusting of the exposure E*/E- and of the corresponding light direction and intensities).

Once an adjustment of the exposure has been performed, leading to an updated value of the current exposure of the camera, the run time processing of the camera can be continued (or restarted) using the updated exposure.

In the exemplary embodiment described, computation of the exposure value to be used as run time (or in simpler word exposure adjustment) can be performed upon detecting a change in light directions. In a variant, computation of the exposure value to be used as run time can be performed from time to time, for instance periodically, on a regular basis.

The Term "processing" is herein to be understood in its larger scope and encompass one or more diverse operation and for example extracting information regarding a captured image or video, computing such information and modifying a rendering of an AR scene on a display device coupled to the electronic device, like a display of a TV set for instance.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures presented herein provide some embodiments, but other embodiments are contemplated, and the discussion of figures does not limit the breadth of the implementations. At least one of the aspects generally relates to a control (adjusting and/or monitoring) of an exposure of a camera. These and other aspects can be implemented as a method, an apparatus, a computer readable storage medium having stored thereon instructions for image processing, according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Moreover, the present aspects are not limited to a given standard and can be applied, for example, to other standards and recommendations, whether pre-existing or future-developed, and extensions of any such standards and recommendations. Unless indicated otherwise, or technically precluded, the aspects described in this application can be used individually or in combination.

Various numeric values are used in the present application (for example regarding exposure values). The specific values are for example purposes and the aspects described are not limited to these specific values.

Figure 2 illustrates a block diagram of an example of a system 200 in which various aspects and embodiments are implemented. System 200 can be embodied as a device including the various components described below, as the electronic device 120 of figure 1, and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 200, singly or in combination, can be embodied in a single integrated circuit (IC), multiple ICs, and/or discrete components. For example, in at least one embodiment, the processing elements of system 200 are distributed across multiple ICs and/or discrete components. In various embodiments, the system 200 is communicatively coupled to one or more other electronic devices and/or systems, as explained in link with figure 1, via, for example, a communications bus or through dedicated input and/or output ports or modules 23. In various embodiments, the system 200 is configured to implement one or more of the aspects described in this document.

The system 200 includes at least one processor 21 configured to execute instructions loaded therein for implementing, for example, the various aspects described in this document. Processor 21 can include embedded memory, input and/or output interface, and various other circuitries as known in the art. The system 200 includes at least one memory 25, 26 (e.g., a volatile memory device, and/or a non-volatile memory device) and/or at least one storage device, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device can be an internal storage device, an attached storage device (including detachable and non-detachable storage devices), and/or a network accessible storage device, as non-limiting examples.

Program code 260 to be loaded onto processor 21 to perform the various aspects described in this document can be stored in the storage device and/or subsequently loaded onto memory 26 for execution by processor 21, for instance when the system 200 is powered on, via a power supply module 29, for instance a power supply module connected to the power line network. In accordance with various embodiments, one or more of processor 21, memory 25, 26, and/or storage device can store one or more of various items during the performance of the processes described in this document. Such stored items can include, but are not limited to bitstream, matrices, variables, and intermediate or final results from the processing of equations, formulas, operations, and operational logic.

In some embodiments, memory inside of the processor 21 is used to store instructions and to provide working memory for processing needed for performing method of the present disclosure. In other embodiments, however, a memory external to the processor 21 can be used for one or more of these functions. The external memory can be the memory 25, 26 and/or the storage device, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 200 can be provided through various input/output devices 23. Such input/output devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown, include composite video.

In various embodiments, the input devices have associated respective input processing elements as known in the art. For example, the RF portion can be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 200 to other electronic devices across USB and/or HDMI connections. It is to be understood that various aspects of input processing, for example, Reed-Solomon error correction, can be implemented, for example, within a separate input processing IC or within processor 21 as necessary. Similarly, aspects of USB or HDMI interface processing can be implemented within separate interface ICs or within processor 21 as necessary. The demodulated, error corrected, and demultiplexed stream is provided to various processing elements, including for example processor 21, operating in combination with the memory and storage elements to process the data stream as necessary for presentation on an output device.

Various elements of system 200 can be provided within an integrated housing, Within the integrated housing, the various elements can be interconnected and transmit data therebetween using suitable connection arrangement, for example, an internal bus 20 as known in the art, including the Inter-IC (I2C) bus, wiring, and printed circuit boards.

The system 200 includes at least one communication interface 27, 28 that enables communication with other devices via at least one communication channel. The at least one communication interfaces can include, but is not limited to, a transceiver configured to transmit and to receive data over at least one communication channel. The at least one communication interface an include, but is not limited to, a modem or network card and the at least one communication channel can be implemented, for example, within a wired and/or a wireless medium.

Data is streamed, or otherwise provided, to the system 200, in various embodiments, using a wireless network such as a Wi-Fi network, for example IEEE 802.11 (IEEE refers to the Institute of Electrical and Electronics Engineers). The Wi-Fi signal of these embodiments is received over the at least one communications channel and at least one of the communication interface(s) which are adapted for Wi-Fi communications. The at least one communications channel of these embodiments is typically connected to an access point or router that provides access to external networks including the Internet for allowing streaming applications and other over-the-top communications. Other embodiments provide streamed data to the system 200 using a set-top box that delivers the data over an HDMI connection of the input/output device(s) 23. Still other embodiments provide streamed data to the system 200 using the RF connection of the input/output device(s) 23. As indicated above, various embodiments provide data in a non-streaming manner. Additionally, various embodiments use wireless networks other than Wi-Fi, for example a cellular network or a Bluetooth network.

The system 200 can include or be coupled to various acquiring device 22, including a camera for instance.

The system 200 can include or be coupled to various user interface devices, including at least one rendering module 24 like display, speakers, and other peripheral devices. The display of various embodiments can include one or more of, for example, a touchscreen display, an organic light-emitting diode (OLED) display, a curved display, and/or a foldable display. The rendering device can be a television, a tablet, a laptop, a cell phone (mobile phone), or another device. The display can be integrated with other components (for example, as in a smart phone), or separate (for example, an external monitor for a laptop). The other peripheral devices include, in various examples of embodiments, one or more of a stand-alone digital video disc (or digital versatile disc) (DVR, for both terms), a disk player, a stereo system, and/or a lighting system. Various embodiments use one or more peripheral devices that provide a function based on the output of the system 200. For example, a disk player performs the function of playing the output of the system 200. In various embodiments, control signals are communicated to the rendering module using signaling such as AV. Link, Consumer Electronics Control (CEC), or other communications protocols that enable device-to-device control with or without user intervention. The user interface devices can be communicatively coupled to system 200 via dedicated connections through respective interfaces. Alternatively, the user interface devices can be connected to system 200 using the communications channel via the communications interface 27, 28. The display and speakers can be integrated in a single rendering module with the other components of system 200 in an electronic device such as, for example, a television. In various embodiments, the display interface includes a display driver, such as, for example, a timing controller (T Con) chip.

The display and speaker can alternatively be separate from one or more of the other components, for example, if the RF portion of an input/output module is part of a separate set-top box. In various embodiments in which the display and speakers are external components, the output signal can be provided via dedicated output connections, including, for example, HDMI ports, USB ports, or COMP outputs.

The embodiments can be carried out by computer software implemented by the processor 21 or by hardware, or by a combination of hardware and software. As a non-limiting example, the embodiments can be implemented by one or more integrated circuits. The memory 25, 26 can be of any type appropriate to the technical environment and can be implemented using any appropriate data storage technology, such as optical memory devices, magnetic memory devices, semiconductor-based memory devices, fixed memory, and removable memory, as non-limiting examples. The processor 21 can be of any type appropriate to the technical environment, and can encompass one or more of microprocessors, general purpose computers, special purpose computers, and processors based on a multicore architecture, as non-limiting examples.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding receiving device (for instance a decoder). For example, in certain embodiments, a transmitting device (like an encoder) can signals to the receiving device at least one of a plurality of transforms, coding modes or flags, or a parameter value (like an exposure value). In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types: a method, process, device, apparatus, system, medium storing instructions, medium storing data, or signal according to any of the embodiments described.

For example, the present disclosure relates to an electronic device coupled with a camera adapted to operate using a plurality of exposures controlled by the electronic device, the electronic device comprising at least one processor adapted for :

- obtaining one or more light source direction from a plurality of first images captured by the camera with a first exposure and,
- upon detecting a variation between the light source directions determined for at least two of the first images, selecting a second exposure to be used to operate the camera.

The device and/or apparatus can be a TV, set-top box, cell phone, tablet, or other electronic device According to another aspect, the present disclosure relates to a method to be performed in an electronic device coupled with a camera adapted to operate using a plurality of exposures controlled by the electronic device, the method comprising:

- obtaining one or more light source direction from a plurality of first images captured by the camera with a first exposure and,
- upon detecting a variation between the light source directions determined for at least two of the first images, selecting a second exposure to be used to operate the camera.

According to at least one embodiment of the present disclosure, the processor can be adapted for, or the method can comprise, selecting the first exposure.

According to at least one embodiment of the present disclosure, selecting the first exposure, respectively the second exposure, can comprise:

- obtaining a plurality of test images of a same scene captured by the camera, the camera using a plurality of exposures,
- obtaining brightness masks associated with images of the plurality of test images;
- obtaining quantities of pixels with varied brightness between pairs of masks associated with successive ordered values of exposures; and
- selecting the first exposure, respectively the second exposure, from the plurality of exposures by taking into account the obtained quantities of pixels with varied brightness.

According to at least one embodiment of the present disclosure, the first and/or second exposure can be selected as being the greatest exposure used by the camera corresponding to a quantity of pixels with varied brightness being lower than a first value.

According to at least one embodiment of the present disclosure, the one or more light source direction can be obtained by taking into account one or more bright areas of brightness masks associated with the first images.

According to at least one embodiment of the present disclosure, brightness masks of the test images and /or said first images can be obtained by thresholding the brightness values of pixels inside the test images and /or the first images and thus distinguishes the bright pixels from the other ones.

According to at least one embodiment of the present disclosure, the at least one processor can be adapted for, or the method can comprise, obtaining intensity of at least one light source using a brightness mask used for obtaining the one or more light source direction.

According to at least one embodiment of the present disclosure, the at least one processor can be adapted for, or the method can comprise, obtaining colors of at least one light source using at least one of the first images and a brightness mask used for determining the one or more light source direction.

The present disclosure also relates to an electronic device coupled with a camera adapted to be at least partially controlled by the electronic device, the electronic device comprising at least one processor adapted for selecting a first exposure to be used to operate the camera, the selecting comprising

- obtaining a plurality of test images of a same scene captured by the camera, the camera using a plurality of exposures,
- obtaining brightness masks associated with images of the plurality of test images;
- obtaining quantities of pixels with varied brightness for at least two masks associated with successive ordered values of exposures; and
- selecting the first exposure from the plurality of exposures by taking into account the obtained quantities of pixels with varied brightness.

According to another aspect, the present disclosure relates to a method to be performed in an electronic device coupled with a camera adapted to be at least partially controlled by the electronic device, the method comprising selecting a first exposure to be used to operate the camera, the selecting comprising :

- obtaining a plurality of test images of a same scene captured by the camera, the camera using a plurality of exposures,
- obtaining brightness masks associated with images of the plurality of test images;
- obtaining quantities of pixels with varied brightness between pairs of masks associated with successive ordered values of exposures; and
- selecting the first exposure from the plurality of exposures by taking into account the obtained quantities of pixels with varied brightness.

According to an embodiment of the present disclosure, the selected first exposure is the greatest exposure used by the camera corresponding to a quantity of pixels with varied brightness being lower than a first value.

According to an embodiment of the present disclosure, the at least one processor can be adapted for, or the method can comprise, obtaining, for at least one first image captured with the first exposure, one or more light source direction by taking into account one or more bright areas of a brightness mask associated with the first image.

According to an embodiment of the present disclosure, brightness masks of the test images and /or the first image can be obtained by thresholding the brightness values of pixels inside the test images and /or the first image and thus distinguishes the bright pixels from the other ones.

According to an embodiment of the present disclosure, the at least one processor can be adapted for, or the method can comprise, obtaining intensity of at least one light source using the brightness mask used for obtaining the one or more light source direction.

According to an embodiment of the present disclosure, the at least one processor can be adapted for, or the method can comprise, obtaining colors of at least one light source using the first image and the mask used for determining the one or more light source direction.

According to an embodiment of the present disclosure, obtaining of the one or more light source direction can be performed on a plurality of first images and the at least one processor can be adapted for, or the method can comprise, upon detecting a variation between the light source directions determined for at least two of the first images, selecting a second exposure to be used for capturing further images.

According to at least one embodiment of the present disclosure, the variation between the light source directions is a variation of directions of a same number of light sources and/or a variation of the number of light sources.

According to at least one embodiment of the present disclosure, the camera is a mobile camera.

According to at least one embodiment of the present disclosure, the mobile camera is integrated in a wearable device.

According to at least one embodiment of the present disclosure, the first and/or second exposure can be computed from the duration of shutter opening of the camera.

While not explicitly described, the present embodiments related to the methods or to the corresponding electronic devices or communication system can be employed in any combination or sub-combination.

According to another aspect, the present disclosure relates to a non-transitory computer readable program product comprising software program code instructions for performing, when the software program is executed by a computer, at least one of the methods of the present disclosure, in any of its embodiments.

For example, at least one embodiment of the present disclosure relates to a non-transitory computer readable program product comprising software program code instructions for performing, when the software program is executed by a computer, a method to be performed in an electronic device coupled with a camera adapted to operate using a plurality of exposures controlled by the electronic device, the method comprising:

- obtaining one or more light source direction from a plurality of first images captured by the camera with a first exposure and,
- upon detecting a variation between the light source directions determined for at least two of the first images, selecting a second exposure to be used to operate the camera.

At least one embodiment of the present disclosure relates to a non-transitory computer readable program product comprising software program code instructions for performing, when the software program is executed by a computer, a method to be performed in an electronic device coupled with a camera adapted to operate using a plurality of exposures controlled by the electronic device, the method comprising selecting a first exposure to be used to operate the camera, the selecting comprising :

- obtaining a plurality of test images of a same scene captured by the camera, the camera using a plurality of exposures,
- obtaining brightness masks associated with images of the plurality of test images;
- obtaining quantities of pixels with varied brightness between pairs of masks associated with successive ordered values of exposures; and
- selecting the first exposure from the plurality of exposures by taking into account the obtained quantities of pixels with varied brightness.

According to another aspect, the present disclosure relates to a non-transitory computer readable storage medium carrying a software program comprising program code instructions for performing, when the software program is executed by a computer, the method of the present disclosure, in any of its embodiments.

According to an embodiment of the present disclosure, the non-transitory computer readable storage medium tangibly embodies a software program of instructions executable by a computer for performing, when the software program is executed by a computer, a method to be performed in an electronic device coupled with a camera adapted to operate using a plurality of exposures controlled by the electronic device, the method comprising:

- obtaining one or more light source direction from a plurality of first images captured by the camera with a first exposure and,
- upon detecting a variation between the light source directions determined for at least two of the first images, selecting a second exposure to be used to operate the camera.

According to an embodiment of the present disclosure, the non-transitory computer readable storage medium tangibly embodies a software program of instructions executable by a computer for performing, when the software program is executed by a computer, a method to be performed in an electronic device coupled with a camera adapted to be at least partially controlled by the electronic device, the method comprising selecting a first exposure to be used to operate the camera, the selecting comprising :

- obtaining a plurality of test images of a same scene captured by the camera, the camera using a plurality of exposures,
- obtaining brightness masks associated with images of the plurality of test images;
- obtaining quantities of pixels with varied brightness between pairs of masks associated with successive ordered values of exposures; and
- selecting the first exposure from the plurality of exposures by taking into account the obtained quantities of pixels with varied brightness.

**Claims**

1. An electronic device coupled with a camera adapted to operate using a plurality of exposures controlled by said electronic device, said electronic device comprising at least one processor adapted for :

   - obtaining one or more light source direction from a plurality of first images captured by said camera with a first exposure and,
   - upon detecting a variation between said light source directions determined for at least two of said first images, selecting a second exposure to be used to operate said camera.

2. A method to be performed in an electronic device coupled with a camera adapted to operate using a plurality of exposures controlled by said electronic device, the method comprising:

   - obtaining one or more light source direction from a plurality of first images captured by said camera with a first exposure and,
   - upon detecting a variation between said light source directions determined for at least two of said first images, selecting a second exposure to be used to operate said camera.

3. The electronic device of claim 1, said processor being adapted for, or the method of claim 2 comprising, selecting said first exposure.

4. The electronic device of claim 1 or 3, or the method of claim 2 or 3 , wherein selecting said first exposure, respectively said second exposure, comprises:

   - obtaining a plurality of test images of a same scene captured by said camera, said camera using a plurality of exposures,
   - obtaining brightness masks associated with images of the plurality of test images;
   - obtaining quantities of pixels with varied brightness between pairs of masks associated with successive ordered values of exposures; and
   - selecting said first exposure, respectively said second exposure, from said plurality of exposures by taking into account said obtained quantities of pixels with varied brightness.

5. The electronic device or the method of claim 4 wherein said first and/or second exposure is selected as being the greatest exposure used by said camera corresponding to a quantity of pixels with varied brightness being lower than a first value.

6. The electronic device of any of claims 1 or 3 to 5, or the method of any of claims 2 to 5 wherein said one or more light source direction is obtained by taking into account one or more bright areas of brightness masks associated with said first images.

7. The electronic device or the method of any of claims 4 to 6 wherein brightness masks of said test images and /or said first images are obtained by thresholding the brightness values of pixels inside said test images and /or said first images and thus distinguishes the bright pixels from the other ones.

8. The electronic device of claim 6 or 7, said at least one processor being adapted for, or the method of claim 6 or 7 comprising, obtaining intensity of at least one light source using a brightness mask used for obtaining said one or more light source direction.

9. The electronic device of any of claims 6 to 8, said at least one processor being adapted for, or the method of any of claims 6 to 8 comprising, obtaining colors of at least one light source using at least one of said first images and a brightness mask used for determining said one or more light source direction.

10. The electronic device any of claims 1 or 3 to 9, or the method of any of claims 2 to 9 wherein the variation between said light source directions is a variation of directions of a same number of light sources and/or a variation of the number of light sources.

11. The electronic device of any of claims 1 or 3 to 10 or the method of any of claims 2 to 10 wherein the camera is a mobile camera.

12. The electronic device of any of claims 1 or 3 to 11 or the method of any of claims 2 to 11 wherein the mobile camera is integrated in a wearable device.

13. The electronic device of any of claims 1 or 3 to 11 or the method of any of claims 2 to 11 wherein the first and/or second exposure is computed from the duration of shutter opening of the camera.

14. A non-transitory computer readable program product comprising software program code instructions for performing, when the software program is executed by a computer, a method to be performed in an electronic device coupled with a camera adapted to operate using a plurality of exposures controlled by the electronic device, the method comprising:

- obtaining one or more light source direction from a plurality of first images captured by the camera with a first exposure and,
- upon detecting a variation between the light source directions determined for at least two of the first images, selecting a second exposure to be used to operate the camera.

15. A non-transitory computer readable storage medium tangibly embodies a software program of instructions executable by a computer for performing, when the software program is executed by a computer, a method to be performed in an electronic device coupled with a camera adapted to operate using a plurality of exposures controlled by the electronic device, the method comprising:

- obtaining one or more light source direction from a plurality of first images captured by the camera with a first exposure and,
- upon detecting a variation between the light source directions determined for at least two of the first images, selecting a second exposure to be used to operate the camera.

140

Wide-angle
camera
110

100

Images

Exposure
Values

130

Mobile AR
device

Central unit

120

Lighting parameters

Figure 1

200

21 — CPU

ROM — 25

22 — Acquiring
Module

Power — 29

23 — I/O
Modules

LAN
interface — 27

WAN
Interface — 28

20

24 — Rendering
Module

RAM — 26

Prog — 260

Figure 2

310 — adjusting exposure

320 — Obtaining light source directions using ajusted exposure

Monitoring variations — 330

310

_Figure 3A_

| Image Capture | $N$ images | Mask Computation | $N$ masks | Optimal mask & high exposure selection | Mask* $E^*$ | Direction Computation | $E^*, Dir^*(k)$ |

$E^*$

Mask*

| Image subset selection | $M$ images | Intensity computation | $M$ solutions | Optimal intensity & low exposure selection | $I^*(k)$ |

_Figure 4_

Exposure Ctrl

+
−

Extraction of Lights Areas: Binary Mask → Direction

& → Intensity Color

_Figure 5_

311 — Obtaining exposure value Ei

310

312 — Obtained image Ii

313 — Selecting E*

Obtaining mask Mi — 3131

Greyscaling Ii — 31311

First Filtering Ii — 31312

Second Filtering Ii — 31313

Obtained bright area contours Bij — 31314

Building mask Mi — 31315

3132 — & (Mi, Mi+1)

3133 — Selecting E*

314 — Obtaining light directions

Obtaining Mass Centers — 3141

Obtaining light directions — 3142

Obtaining intensities — 315

Selecting E- — 3151

Obtaining colors — 316

Figure 3B

21

Figure 6

Figure 7

Figure 15

| Exposure from -2 to +2 |||||||||
|------|------|----|------|-----|-----|----|-----|----|
| -2 | -1.5 | -1 | -0.5 | 0.0 | 0.5 | 1 | 1.5 | 2 |
| M1 | M2 | M3 | M4 | M5 | M6 | M7 | M8 | M9 |
| &1 | &2 | &3 | &4 | &5 | &6 | &7 | &8 | |
| C1 | C2 | C3 | C4 | C5 | C6 | C7 | C8 | |

Figure 8

Figure 9

Figure 10

Result

Figure 11

Result

Figure 12

Figure 13

Figure 14

Europäisches
Patentamt

European
Patent Office

Office européen
des brevets

# EUROPEAN SEARCH REPORT

Application Number

EP 19 30 6506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 193 627 B1 (HERMAN DAVID M [US] ET AL) 29 January 2019 (2019-01-29) <br> * figures 9,10 * <br> * columns 2,4,6 * <br> ----- | 1,2,14, 15 | INV. <br> H04N5/235 <br> H04N5/262 <br> G06T15/50 |
| A | KOC EMRE ET AL: "Estimation of Environmental Lighting from Known Geometries for Mobile Augmented Reality", 2013 INTERNATIONAL CONFERENCE ON CYBERWORLDS, IEEE, 21 October 2013 (2013-10-21), pages 132-139, XP032529462, DOI: 10.1109/CW.2013.65 [retrieved on 2013-12-09] <br> * pages 132,133 * <br> ----- | 1-15 | |
| A | JIDDI SALMA ET AL: "Probeless and Realistic Mixed Reality Application in Presence of Dynamic Light Sources", 2018 IEEE INTERNATIONAL SYMPOSIUM ON MIXED AND AUGMENTED REALITY ADJUNCT (ISMAR-ADJUNCT), IEEE, 16 October 2018 (2018-10-16), pages 419-420, XP033542866, DOI: 10.1109/ISMAR-ADJUNCT.2018.00125 [retrieved on 2019-04-25] <br> * the whole document * <br> ----- | 1-15 | TECHNICAL FIELDS SEARCHED (IPC) <br><br> H04N <br> G06T |
| A | US 2012/051635 A1 (KUNKEL TIMO [CA] ET AL) 1 March 2012 (2012-03-01) <br> * figure 5 * <br> ----- | 1-15 | |
| A | US 2013/121567 A1 (HADAP SUNIL [US] ET AL) 16 May 2013 (2013-05-16) <br> * figures 2,10,11 * <br> ----- | 1-15 | |

The present search report has been drawn up for all claims

| Place of search | Date of completion of the search | Examiner |
|---|---|---|
| The Hague | 28 April 2020 | Doyle, Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 30 6506

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2020

| Patent document cited in search report | | Publication date | Patent family member(s) | | | Publication date |
|---|---|---|---|---|---|---|
| US 10193627 | B1 | 29-01-2019 | CN | 110557574 | A | 10-12-2019 |
| | | | DE | 102019114533 | A1 | 05-12-2019 |
| | | | US | 10193627 | B1 | 29-01-2019 |
| US 2012051635 | A1 | 01-03-2012 | CN | 102422322 | A | 18-04-2012 |
| | | | KR | 20120013977 | A | 15-02-2012 |
| | | | US | 2012051635 | A1 | 01-03-2012 |
| | | | WO | 2010132237 | A1 | 18-11-2010 |
| US 2013121567 | A1 | 16-05-2013 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUZUKI.** Topological Structural Analysis of Digitized Binary Images by Border Following. *CVGIP,* 1985, vol. 30 (1), 32-46